# EUROPÄISCHE PATENTANMELDUNG

(11) **EP 1 443 632 A2**
(43) Veröffentlichungstag der Anmeldung: **04.08.2004**
(21) Anmeldenummer: 04001579.4
(22) Anmeldetag: 26.01.2004
(51) Int. Cl.: H02K 41/03

(54) **Flächenlinearmotor, insbesondere für frei lenkbare Versuchsfahrzeuge, und Versuchsanlage mit einem Flächenlinearmotor**

(30) Priorität: 31.01.2003 DE 10304086
(71) Anmelder: SIEMENS AKTIENGESELLSCHAFT, 80333 München (DE)
(72) Erfinder: Grimm, Peter, Dr., 91056 Erlangen (DE)

(57) **Zusammenfassung**

Der Flächenlinearmotor weist erste Komponenten (LM P1.0) zur Generierung magnetischer Wanderfelder und zweite Komponenten (LM S1.1) mit Elementen zur Generierung eines statischen Magnetfeldes bzw. mit ferromagnetischen und/oder stromleitenden Eigenschaften auf. Erste oder zweite Komponenten sind in einer Fahrfläche (FF) so verteilt angeordnet sind (FLP), dass diese eine erste Teilmenge (LM P1.0) mit einer ersten Wirkungsrichtung (MWF1) und eine zweite Teilmenge (LM P1.1) mit eine zweiten Wirkungsrichtungen (MWF2) bilden. Die Teilmengen liegen in einer Fahrfläche (FF) netzartig ineinander liegen. Die zweiten oder ersten Komponenten sind auf einem Mobilteil (MF) so verteilt angeordnet (FLS), dass diese eine dritte Teilmenge (LM S1.2, LM S2.0) mit einer dritten Wirkungsrichtung (MWM1) und eine vierte Teilmenge mit einer vierten Wirkungsrichtung (MWM2) bilden, wobei auch diese Teilmengen auf einem Mobilteil ineinander liegen. Die ersten und zweiten Wirkungsrichtungen (MWF1, MWF2) stimmen mit den dritten und vierten Wirkungsrichtungen (MWM1, MWM2) jeweils paarweise möglichst übereinstimmen. Besonders vorteilhaft ist eine Versuchsanlage mit einem erfindungsgemäßen Flächenlinearmotor versehen, bei der das Mobilteil einen Simulator für ein Straßenfahrzeug darstellt, und der Flächenlinearmotor den Antrieb oder das Fahrwerk des Straßenfahrzeugs nachbildet.

## Beschreibung

Der Antrieb von frei navigierbaren, nicht durch Schienen geführten Fahrzeugen, z.B. Straßenfahrzeugen, erfolgt überlichweise dadurch, dass sich die komplette Antriebseinheit im Fahrzeug selbst befindet. Hiermit ist einerseits der Nachteil verbunden, dass der gesamte Antrieb u.U. ein relativ großes Gewicht aufweist. Andererseits muss einem im Fahrzeug befindlichen Antrieb auch die gesamte Antriebsenergie zugeführt werden. Dies hat z.B. bei einem elektrischen Antrieb zur Folge, dass die notwendige elektrische Energie entweder in Form von Batterien mitgeführt, von Leitungssystemen wie z.B. Oberleitungen abgegriffen oder über Schleppkabelanordnungen eingespeist werden muss.

Weiterhin sind Verteilersysteme bekannt, die ohne Flurförderfahrzeuge arbeiten. Dabei wird die Linearbewegung eines lineargetriebenen Palettenwagens nicht über Rotationen und Getriebe erzielt, sondern über Permanentmagneten am Palettenwagen und Statoren im Boden, die ein magnetisches Wanderfeld erzeugen. Derartige Systeme werden auch als lineare Direktantriebe bezeichnet. Diese bestehen aus einem gestreckten Stahlkörper und einem Linearläufer mit Spulensystemen und Permanentmagneten. Der Stahlkörper dient dabei sowohl als Primärteil des Linearmotors, als auch als eine schienenartige Führung für den Linearläufer, der den Sekundärteil des Motors bildet. Mit derartigen linearen Direktantrieben können xy-Kreuztisch- oder xyz- Antriebssystem aufgebaut werden. Weiterhin werden z.B. Drehstrom-Linearantriebe, die Synchron-Linearmotoren aufweisen, für die Förderung von Werkstücken bei der Halbleiterfertigung, der Leiterplattenbearbeitung, der Druck-, Verpackungs-, Werkzeug- und Textilmaschinenindustrie und in der Bestückungs- und Fertigungstechnik eingesetzt. Weiterhin können lineargetriebene Palettenwagen z.B. in automatischen Parksystemen, Containertransportanlagen, Transportstrecken u.dgl. mit Linearantriebsmotoren ausgerüstet sein. Bei allen diesen Lösungen ist aber ein schienenartiges Führungssystem für die lineargetriebenen Palettenwagen erforderlich. Dieses dient quasi als eine Spur zur Vorgabe und Einhaltung gewünschter Bewegungs- und Förderrichtungen.

Ein herkömmlicher Linearmotor weist zumindest zwei Komponenten auf. Eine erste Komponente, auch Primärteil genannt, dient zur Generierung eines magnetischen Wanderfeldes in einer Wirkungsrichtung. Vorteilhaft verfügt die erste Komponente hierzu über Wanderfeld erzeugende Spulen mit Blechpaket. Eine zweite Komponente, auch Sekundärteil genannt, weist in einer ersten Ausführung Elemente zur Generierung eines statischen Magnetfeldes auf. Hierzu kann ein Eisenteil mit Permanentmagneten oder mit Gleichstromspulen, deren Erregung u.U. in der Stärke einstellbar ist, eingesetzt sein. Die zweite Komponenten kann in einer zweiten Ausführung ein gezahntes Eisenteil aufweisen, dass auf Grund seiner Geometrie dann unterschiedliche ferromagnetische Bereiche aufweist. Die zweite Komponente kann in einer dritten Ausführung schließlich passiv sein, d.h. aus einem stromleitfähigen Element bestehen. Hierbei kann es sich z.B. um ein Eisen, Kupfer, Aluminiumteil oder auch um flüssiges, leitfähiges Metall handeln.

Auch die zweite Komponente weist eine Wirkungsrichtung auf. Bei den oben beschriebenen ersten und zweiten Ausführungen wird die Wirkungsrichtung durch die konstruktive Lage und den Aufbau von Permanentmagneten, Gleichstromspulen bzw. gezahntem Eisenteil vorgegeben. Eine Kombination einer ersten Komponente mit einer zweiten Komponente in diesen Ausführungen wird als ein synchroner Linearmotor bezeichnet. Bei der oben beschriebenen dritten Ausführung tritt im Inneren des passiven, stromleitenden Elements ebenfalls eine Wirkungsrichtung auf, die von der Wirkungsrichtung einer in räumlicher Nähe befindlichen ersten, Wanderfeld erzeugenden Komponenten hervorgerufen wird. Eine Kombination einer ersten Komponente mit einer zweiten Komponente in der dritten Ausführung wird als ein asynchroner Linearmotor bezeichnet.

Befinden sich folglich eine erste und eine zweite Komponente eines Linearmotors in einer räumlichen Nähe zueinander und stimmen deren magnetische Wirkungsrichtungen überein oder haben zumindest eine Resultierende, bzw. wird im Inneren einer passiven zweiten Komponenten eine Wirkungsrichtung erzeugt, so treten Kräfte zwischen den Komponenten in der magnetischen Wirkungsrichtung bzw. der Richtung einer Resultierenden auf. Abhängig vom jeweiligen konstruktiven Aufbau des Linearmotors können die Kräfte eine Beschleunigung der ersten oder zweiten Komponente bewirken.

Bei einer ersten Ausführung ist die erste Komponente konstruktiv feststehend angeordnet, d.h. wirkt als ein Stator. Die zweite Komponente ist dann als ein Mobilteil ausgeführt, d.h. wirkt als ein Läufer, so dass die Beschleunigungskräfte eine Fortbewegung der zweiten Komponente bewirken. Eine Ausführung dieser Art bietet den Vorteil, dass die in der Regel konstruktiv aufwendigere und insbesondere zur Erzeugung des magnetischen Wanderfeldes mit großer elektrischer Energie zu versorgende erste Komponente stillstehend ist. Demgegenüber ist die konstruktiv weniger aufwendige zweite Komponente, die bei einem synchronen Linearmotor nur mit geringer elektrischer Hilfsenergie zu versorgende ist bzw. bei einem asynchronen Linearmotor sogar mit keinerlei elektrische Hilfsenergie benötigt, auf einfachere Weise als ein Mobilteil ausführbar. Grundsätzlich ist auch eine zweite Ausführung möglich, bei der die erste Komponente als ein Mobilteil und die zweite Komponente konstruktiv feststehend ausgeführt sind.

Der Erfindung liegt die erste Aufgabe zu Grunde, unter Verwendung der oben beschriebenen, von einem Linearmotor bekannten Komponenten, einen Elektromotor anzugeben, der einen Antrieb in beide Raumrichtungen einer Ebene ermöglicht. Eine weitere Aufgabe besteht darin, einen derart gefundenen Motor so weiter zu entwickeln, dass ein Antrieb von frei lenkbaren Fahrzeugen in der Ebene möglich wird.

Die der Erfindung zu Grunde liegenden Aufgaben werden mit den Merkmalen des im Anspruch 1 angegebenen Flächenlinearmotors gelöst. Vorteilhafte Weiterbildungen des erfindungsgemäßen Flächenlinearmotors sind in den Unteransprüchen angegeben. Weitere Ansprüche sind auf eine Versuchsanlage gerichtet, bei der ein entsprechender Flächenlinearmotor zur Simulation von Straßenfahrzeugen eingesetzt wird.

Bei einem Flächenlinearmotor gemäß der Erfindung sind einerseits in einer Fahrfläche eine Vielzahl von einer der beiden, bei der Erläuterung eines Linearmotors in der Beschreibungseinleitung genannten ersten oder zweiten Komponenten verteilt angeordnet. Diese Komponenten sollen nachfolgend zum Zwecke der besseren Erläuterbarkeit als Flächenkomponenten bezeichnet werden.

Weiterhin sind bei dem erfindungsgemäßen Flächenlinearmotor auf einem Mobilteil zumindest zwei der anderen der beiden, bei der Erläuterung eines Linearmotors in der Beschreibungseinleitung genannten zweiten oder ersten Komponenten verteilt und möglichst parallel zur Fahrfläche angeordnet. Diese Komponenten sollen nachfolgend zur besseren Erläuterbarkeit als Mobilkomponenten bezeichnet werden.

Ein Flächenlinearmotor gemäß der Erfindung ist sowohl so ausführbar, dass als Flächenkomponenten magnetische Wanderfelder erzeugende erste Komponenten und als Mobilkomponenten zweite Komponente mit statischem Magnetfeld bzw. ferromagnetischen und/oder stromleitenden Eigenschaften eingesetzt werden. Es sind aber auch umgekehrte Ausführungen des erfindungsgemäßen Flächenlinearmotors möglich, bei denen als Flächenkomponenten zweite Komponente mit statischem Magnetfeld bzw. ferromagnetischen und/oder stromleitenden Eigenschaften und als Mobilkomponenten magnetische Wanderfelder erzeugende erste Komponenten eingesetzt werden. Die Vorteile beider Ausführungsvarianten werden noch näher erläutert werden.

Erfindungsgemäß erfolgt die Anordnung der Flächenkomponenten so, dass die in der Fahrfläche verteilten Flächenkomponenten zumindest in zwei Teilmengen gegliedert sind. Dabei weisen die der ersten bzw. der zweiten Teilmenge zugeordneten Flächenkomponenten jeweils übereinstimmende, erste bzw. zweite magnetische Wirkungsrichtungen auf. Die beiden Teilmengen der Flächenkomponenten liegen dabei in einer Fahrfläche netzartig ineinander, Weiterhin sind die erste und zweite Wirkungsrichtung unterschiedlich, d.h. die Wirkungsrichtungen der beiden Teilmengen sind nicht parallel.

Vorteilhaft sind die Flächenkomponenten in der Fahrfläche so verteilt angeordnet, dass deren magnetische Wirkungsrichtungen sowohl in der x- als auch der y- Raumrichtung abwechselnd annähernd orthogonal zueinander ausgerichtet sind. Es treten in diesem Beispiel somit quasi zwei ineinander liegende orthogonale und zu den Raumkoordinaten x-, y- möglichst koordinatengetreue Netze von magnetischen Wirkungsrichtungen in der Fahrfläche auf.

Weiterhin sind bei dem erfindungsgemäßen Flächenlinearmotor zumindest zwei der anderen der beiden oben genannten Komponenten auf einem Mobilteil angeordnet, nachfolgend als Mobilkomponenten bezeichnet. Diese bilden eine dritte Teilmenge mit einer dritten Wirkungsrichtung und eine vierte Teilmenge mit einer vierten Wirkungsrichtung. Auch hier liegen die Teilmengen auf einem Mobilteil netzartig ineinander und die dritten und vierten Wirkungsrichtungen sind unterschiedlich. Die Anordnung der ersten und zweiten Teilmengen von Flächenkomponenten in der Fahrfläche und die Anordnung der dritten und vierten Teilmengen von Mobilkomponenten am Mobilteil erfolgt dabei so, dass deren dritte und vierte magnetische Wirkungsrichtungen jeweils mit der Wirkungsrichtung der ersten bzw. zweiten Teilmenge der in der Fahrfläche verteilten Flächenkomponenten möglichst paarweise übereinstimmen.

Vorteilhaft sind die magnetischen Wirkungsrichtungen der Flächenkomponenten wiederum orthogonal zueinander ausgerichtet. Abhängig von der Größe des Mobilteiles können darauf auch eine größere Anzahl von Mobilkomponenten angeordnet sein. Die Anordnung erfolgt auch auf dem Mobilteil so, dass die Mobilkomponenten zumindest in zwei Teilmengen gegliedert sind, wobei die der ersten bzw. zweiten Teilmenge zugeordneten Mobilkomponenten jeweils übereinstimmende magnetische Wirkungsrichtungen aufweisen, die Wirkungsrichtungen der beiden Teilmengen aber nicht parallel sind. Es können auf diese Weise auch auf dem Mobilteil quasi zwei ineinander liegende orthogonale und zu den Raumkoordinaten x-, y- koordinatengetreue Netze von magnetischen Wirkungsrichtungen aufgebaut werden.

Ein Flächenlinearmotor gemäß der Erfindung ist sowohl so ausführbar, dass die magnetische Wanderfelder erzeugenden ersten Komponenten als Flächenkomponenten und die zweiten Komponente mit statischem Magnetfeld bzw. ferromagnetischen und/oder stromleitenden Eigenschaften als Mobilkomponenten eingesetzt sind, als auch umgekehrt. Es sind also auch Ausführungen des erfindungsgemäße Flächenlinearmotors möglich, bei denen die zweiten Komponente mit statischem Magnetfeld bzw. ferromagnetischen und/oder stromleitenden Eigenschaften als Flächenkomponenten und die magnetische Wanderfelder erzeugenden ersten Komponenten als Mobilkomponenten eingesetzt werden. Die Vorteile der beiden Ausführungsvarianten werden nachfolgend noch näher erläutert werden.

Es soll besonders hervorgehoben werden, dass es bei diesen beiden Ausführungen des erfindungsgemäßen Flächenlinearmotors ohne weiteres möglich ist, eine Variante mit einer zu der Ausbreitung des magnetischen Wanderfeldes synchrone als auch asynchrone zweidimensionale Bewegung des Mobilteiles über der Fahrfläche zu schaffen. Die synchrone bzw. asynchrone Eigenschaft des erfindungsgemäßen Flächenlinearmotors ergibt sich durch den Einsatz von Elementen mit statischem Magnetfeld / ferromagnetischen Eigenschaften bzw. durch den Einsatz von Elementen mit stromleitenden Eigenschaften.

Ein Flächenlinearmotor gemäß der Erfindung ermöglicht eine nahezu uneingeschränkte Bewegung von dessen Mobilteil über einer mit Flächenkomponenten belegten Fahrfläche. Weisen die beiden Teilmengen der Flächenkomponenten und der Mobilkomponenten vorteilhaft jeweils orthogonal zueinander ausgerichtete magnetische Wirkungsrichtungen auf, so kann das Mobilteil in der Art eines Koordinatenpositionierungssystems in der Ebene nahezu beliebig in x- und y- Richtung verfahren werden. Andererseits können die magnetischen Wirkungsrichtungen der Teilmengen von Flächen- und Mobilkomponenten auch von 90 Grad abweichende, insbesondere kleinere Winkel einschließen, falls bei einem besonderen Anwendungsfall bestimmte Vorzugsrichtungen für die Bewegung des Mobilteiles benötigt werden.

Eine aktuelle Verfahrrichtung kann z.B. dadurch vorgegeben werden, dass zumindest diejenige Teilmenge der Mobilkomponenten am Mobilteil erregt wird, deren magnetische Wirkungsrichtung mit der aktuell gewünschten Verfahrrichtung übereinstimmt. Verfügen die Mobilkomponenten über ein mittels einer Spule einstellbares statisches Magnetfeld, so kann auch die gewünschte Beschleunigung durch Steuerung der Spulenerregung vorgegeben werden. Sind andererseits die Mobilkomponenten des Mobilteils in Form von passiven, zweiten Komponenten mit ferromagnetischen Eigenschaften ausgeführt, so wird eine Vorschubkraft in der jeweils gewünschten Richtung dadurch erzeugt, dass diejenigen Flächenkomponenten unterhalb des Mobilteiles erregt werden, deren magnetische Wirkungsrichtung mit der aktuell gewünschten Verfahrrichtung übereinstimmt. Fahrrichtungsänderungen bzw. Kurvenfahrten des Mobilteiles können durch dynamische Umschaltungen in der Erregung von Teilmengen der Flächen- bzw. Mobilkomponenten, also durch abwechselnde Aktivierung der jeweils benötigten orthogonalen magnetischen Wirkungsrichtung einzelnen Komponententeilmengen, erzielt werden.

Ein Flächenlinearmotor gemäß der Erfindung kann vielfältig so eingesetzt werden, dass das Mobilteil als ein Träger für verschiedenste "Nutzlasten" dient. So sind z.B. Positionieranwendungen möglich, bei denen das Mobilteil als ein Schlitten zur Positionierung von z.B. temporär darauf abgestellten Nutzlasten dient. Derartige Anwendungen können Abmessungen aufweisen, die mit Labor- oder Kleinförderanlagen vergleichbar sind. Bei einer anderen beispielhaften Anwendung kann z.B. der gesamte Boden einer Versuchs- oder Montagehalle mit Flächenkomponenten bestückt sein. Es ist dann eine frei programmierbare Verfahrbarkeit des Mobilteiles in der gesamten Halle möglich. Das Mobilteil kann in einem solchen Fall z.B. als eine Art Fahrgestell für dauerhaft darauf montierte Fahrerkabinen bzw. Karosserien dienen. Solche Anwendungen sind z.B. für Testsysteme, Versuchsanordnungen bzw. Simulatoren, aber auch in der Fördertechnik einsetzbar.

Eine reibungsarme Verfahrbarkeit des Mobilteiles des Flächenlinearmotors kann auf unterschiedlichste Weise erreicht werden. So können z.B. ein Luftkissen bzw. magnetische Abstoßungskräfte ein reibungsarmes Schweben des Mobilteiles bewirken. Bei einer besonders vorteilhaften Ausführung der Erfindung ist das Mobilteil in Form eines lenkbaren Fahrwerkes ausgeführt, z.B. vergleichbar mit dem Fahrwerk eines Automobils. Hierzu weist das Mobilteil eine z.B. starre Hinterachse und eine z.B. lenkbare Vorderachse auf. Ein Flächenlinearmotor mit einem derart über ein Fahrgestell lenkbares Mobilteil ermöglicht z.B. die Simulation von Kurvenfahrten auch mit hohen Geschwindigkeiten. Dies ist besonders zur Simulation des Fahrverhaltens von Fahrzeugen hilfreich.

Es ist für viele Anwendungsfälle vorteilhaft, wenn als Flächenkomponenten bevorzugt orthogonale Wanderfelder erzeugende erste Komponenten und als Mobilkomponenten zweite Komponente mit statischem Magnetfeld bzw. ferromagnetischen Eigenschaften eingesetzt werden. Das Mobilteil wird dann in der Art eines Schlittens von den magnetischen Wanderfelder der Flächenkomponenten in der jeweils gewünschten Raumrichtung nachgezogen wird. Die im Mobilteil eingesetzten zweiten Komponenten können anwendungsabhängig so ausgeführt sein, dass zusammen mit den ersten Komponenten in der Überdeckungsfläche zwischen Fahrfläche und Mobilteil synchrone oder asynchroner Flächenteilmotoren auftreten. Im Falle von synchronen Flächenteilmotoren kann die zweite Komponenten in Form eines magnetisch leitfähigen Gebildes mit eingebetteten Dauermagneten bzw. mit eingebetteten, durch Gleichstrom erregten Spulen ausgeführt sein. Weiterhin kann das magnetisch leitfähige Gebilde Bereiche unterschiedlicher magnetischer Leitfähigkeit aufweisen, die z.B. durch eine zahnförmige Geometrie des magnetisch leitfähigen Gebildes erzielt werden können. Eine Ausführung mit eingebetteten, durch Gleichstrom erregten Spulen ist besonders gut regelbar. Da der Strom durch die Spulen anwendungsabhängig vorgebbar ist, kann somit die jeweilige Beschleunigungskraft und damit auch die Fahrtrichtung eines lenkbaren Fahrgestells besonders gut vorgegeben werden. Im Falle asynchroner Flächenteilmötoren ist die zweite Komponente passiv. Diese besteht dann im wesentlichen aus Eisen bzw. aus einem Material, dass mit Eisen vergleichbare elektrische Eigenschaften aufweist. Gegebenenfalls kann zusätzlich Material vorhanden sein, dass eine größere elektrische Leitfähigkeit als Eisen aufweist.

Die Erfindung weist eine Vielzahl von Vorteilen auf. Auf Grund der getrennten Anordnung der Primär- und Sekundärteile des Flächenlinearmotors befinden sich nicht alle Teile des Antriebssystems ausschließlich auf dem Mobilteil. Wird auf dieses z.B. eine mit einem Straßenfahrzeug vergleichbare Beschleunigungsleistung ausgeübt, so tritt dabei aber eine geringere bewegte Masse auf. Dies führt dazu, dass höhere Beschleunigungswerte für lenkbare Fahrzeuge erreicht werden können, als dies bei konventionellen nicht- schienengeführten Fahrzeugantriebssystemen möglich ist. Bei dem erfindungsgemäßen Flächenlinearmotor treten zusätzlich zu den Beschleunigungskräften in der Fahrebene erhebliche Anzugskräfte zwischen den als Primär- und Sekundärteilen wirkenden ersten und zweiten Komponenten auf. Diese können bei einer Verwendung als Fahrzeugsimulator zur Nachbildung einer besonders hohen Bodenhaftung eingesetzt werden, die mit Spezialreifen nicht erreichbar wäre. Das Mobilteil als Simulationsfahrzeug klebt quasi auf der Fahrfläche, so dass hohe Bewegungsgeschwindigkeiten bei kleinen Kurvenradien möglich sind.

Wie bereits oben dargestellt, ist es auch möglich, dass Wirkungsprinzip des erfindungsgemäßen Flächenlinearmotors umzudrehen, also die zweiten Komponente mit statischem Magnetfeld bzw. ferromagnetischen Eigenschaften als Flächenkomponenten und die magnetische Wanderfelder erzeugenden ersten Komponenten als Mobilkomponenten einzusetzen. Da zweite Komponenten technisch weniger aufwendig sind, im passiven Fall sogar ohne elektrische Hilfsenergieversorgung auskommen, ist es u.U. leichter möglich, sehr große Bodenflächen damit zu bestücken. Allerdings müssen dann erste Komponenten in Form von magnetische Wanderfeld erzeugende Spulen auf dem Mobilteil untergebracht werden. Die gesamte Antriebsleistung, die bei einer Verwendung z.B. als ein Fahrzeugsimulator mehrere 100 kW betragen kann, muss dem Mobilteil dann über u.U. aufwendige Konstruktionen, z.B. über Schleppkabel, übertragen werden.

Wie oben bereits ausgeführt, kann das Mobilteil des erfindungsgemäßen Flächenlinearmotors auch in Form eines lenkbaren Fahrwerkes ausgeführt sein, also z.B. eine starre Hinterachse und eine lenkbare Vorderachse aufweisen. Sind dabei die Mobilkomponenten fest mit dem Mobilteil verbunden, so werden zugeordnete Flächen- und Mobilkomponenten bei Kurvenfahrten nicht nur räumlich voneinander entfernt, sondern deren magnetische Wirkungsrichtungen nehmen auch wachsende Winkel zueinander ein. Zur Aufrechterhaltung einer Fortbewegung des Mobilteiles müssen also Erregungen von Komponenten aus den jeweils ersten bzw. zweiten Teilmengen gezielt so zu- und abgeschaltet werden, das die magnetischen Wirkungsrichtungen der aktiven, zusammenwirkenden Flächen- und Mobilkomponenten möglichst in jeder Kurvenposition des Mobilteiles weniger als 45 Grad voneinander abweichen. Dies bei kleinen bzw. mittleren Geschwindigkeiten und keinen extremen Kurvenradien des Mobilteiles problemlos möglich.

Gemäß einer weiteren Ausführung der Erfindung ist es in einem solchen Fall vorteilhaft, wenn die Mobilkomponenten drehbar am Mobilteil angebracht sind und diese abhängig von der aktuellen Kurvenposition des Mobilteiles so nachgeführt werden, dass eine möglichst parallele Ausrichtung der magnetischen Wirkungsrichtungen der aktiven, zusammenwirkenden Flächen- und Mobilkomponenten aufrecht erhalten wird. Hierzu können die Mobilkomponenten in einem Feld angeordnet und auf einem Drehteller platziert sein. Über eine Servoantrieb kann der Drehteller vorteilhaft dann so ständig so nachjustiert werden, dass die magnetischen Wirkungsrichtungen von übereinander liegenden Komponenten in der Fahrfläche und auf dem Mobilteil möglichst parallel sind. Eins solches Mobilteil erleichtert eine Simulation von Kurvenfahrten mit kleinen Radien und hohen Geschwindigkeiten.

Die Erfindung und vorteilhafte Weiterbildungen derselben werden im weiteren an den nachfolgend kurz angeführten Figuren näher erläutert. Dabei zeigen
- Fig. 1: einen beispielhaften Flächenlinearmotor gemäß der Erfindung, deren Flächenkomponenten matrixartig in einer Fahrfläche und beispielhaft vier Mobilkomponenten auf einem Mobilteil angeordnet sind, und
- Fig. 2: eine vorteilhafte Weiterbildung des erfindungsgemäßen Flächenlinearmotors, bei dem das Mobilteil ein frei lenkbares Fahrgestell aufweist.

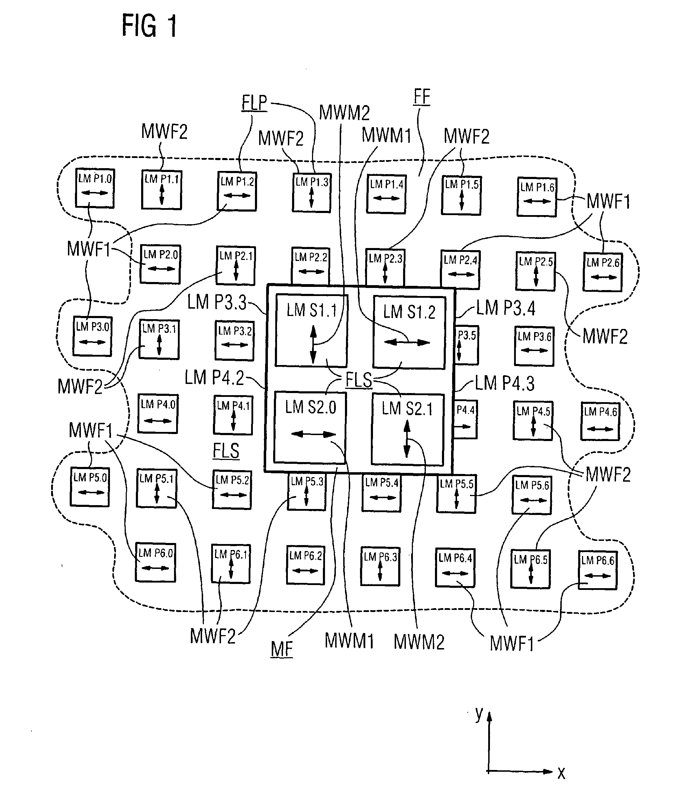

Bei dem in der Fig. 1 dargestellten, beispielhaften Flächenlinearmotor gemäß der Erfindung, sind eine große Anzahl von Flächenkomponenten matrixartig in einer Fahrfläche FF und beispielhaft vier Mobilkomponenten auf einem Mobilteil angeordnet. Die Flächenkomponenten sind dabei vorteilhaft in einem regelmäßigen, orthogonalen Feld FLP angeordnet, welches an einem kartesischen Koordinatensystem x, y ausgerichtet ist. Figur 1 zeigt aus dem Feld der Flächenkomponenten den folgenden Ausschnitt:
LM P1.0, LM P1.1, LM P1.2, LM P1.3, LM P1.4, LM P1.5, LM P1.6,
LM P2.0, LM P2.1, LM P2.2, LM P2.3, LM P2.4, LM P2.5, LM P2.6,
LM P3.0, LM P3.1, LM P3.2, LM P3.3, LM P3.4, LM P3.5, LM P3.6,
LM P4.0, LM P4.1, LM P4.2, LM P4.3, LM P4.4, LM P4.5, LM P4.6
LM P5.0, LM P5.1, LM P5.2, LM P5.3, LM P5.4, LM P5.5, LM P5.6
LM P6.0, LM P6.1, LM P6.2, LM P6.3, LM P6.4, LM P6.5, LM P6.6

Die Flächenkomponenten sind dabei erfindungsgemäß in eine erste und eine zweite Teilmenge gegliedert, wobei die Flächenkomponenten in der ersten Teilmenge eine erste Wirkungsrichtung MWF1 und die Flächenkomponenten in der zweiten Teilmenge eine zweite Wirkungsrichtung MWF2 aufweisen.

Die erste Teilmenge im Ausschnitt von Fig. 1 mit der Wirkungsrichtung MWF1 umfasst dabei die Flächenkomponenten
LM P1.0, LM P1.2, LM P1.4, LM P1.6
LM P2.0, LM P2.2, LM P2.4, LM P2.6
LM P3.0, LM P3.2, LM P3.4, LM P3.6
LM P4.0, LM P4.2, LM P4.4, LM P4.6
LM P5.0, LM P5.2, LM P5.4, LM P5.6
LM P6.0, LM P6.2, LM P6.4, LM P6.6

Die zweite Teilmenge im Ausschnitt von Fig. 1 mit der Wirkungsrichtung MWF2 umfasst dabei die Flächenkomponenten
LM P1.1, LM P1.3, LM P1.5
LM P2.1, LM P2.3, LM P2.5
LM P3.1, LM P3.3, LM P3.5
LM P4.1, LM P4.3, LM P4.5
LM P5.1, LM P5.3, LM P5.5
LM P6.1, LM P6.3, LM P6.5

Gemäß der Erfindung sind die Teilmengen in der Fahrfläche FF netzartig ineinander liegend verteilt, und die erste und zweite Wirkungsrichtung MWF1, MWF2 unterschiedlich. So weisen in jeder Zeile und Spalte die nebeneinander bzw. untereinander liegenden Flächenkomponenten abwechselnd unterschiedliche Wirkungsrichtungen auf, d.h. z.B. für die erste dargestellte Zeile LM P1.0 = MWF1, LM P1.1 = MWF2, LM P1.2 = MWF1, u.s.w. und z.B. für die erste dargestellte Spalte LM P1.1 = MWF2, LMP2.0 = MWF1, LM P3.1 = MWF2, u.s.w..

Im Feld FLP von Figur 1 sind als Flächenkomponenten eines Flächenlinearmotors beispielhaft ersten Komponenten zur Generierung eines magnetischen Wanderfeldes angeordnet.

Im Beispiel der Fig. 1 sind auch die Mobilkomponenten des erfindungsgemäßen Flächenlinearmotors vorteilhaft in einem regelmäßigen, orthogonalen Feld FLS angeordnet, das auch an dem kartesischen Koordinatensystem x, y ausgerichtet ist. Figur 1 zeigt als Mobilkomponenten :
LM S1.2, LM S2.0
LM S1.1, LM S2.1

Auch die Mobilkomponenten sind dabei erfindungsgemäß in zwei Teilmengen gegliedert, die als dritte und vierte Teilmenge bezeichnet werden. Die Mobilkomponenten in der dritten Teilmenge weisen dabei eine dritte Wirkungsrichtung MWM1 und die Mobilkomponenten in der vierten Teilmenge eine zweite Wirkungsrichtung MWM2 auf.

Im Ausschnitt von Fig. 1 umfasst dabei die dritte Teilmenge mit der Wirkungsrichtung MWM1 die Mobilkomponenten
LM S1.2, LM S2.0

Schließlich umfasst im Ausschnitt von Fig. 1 die vierte Teilmenge mit der Wirkungsrichtung MWM2 die Mobilkomponenten
LM S1.1, LM S2.1

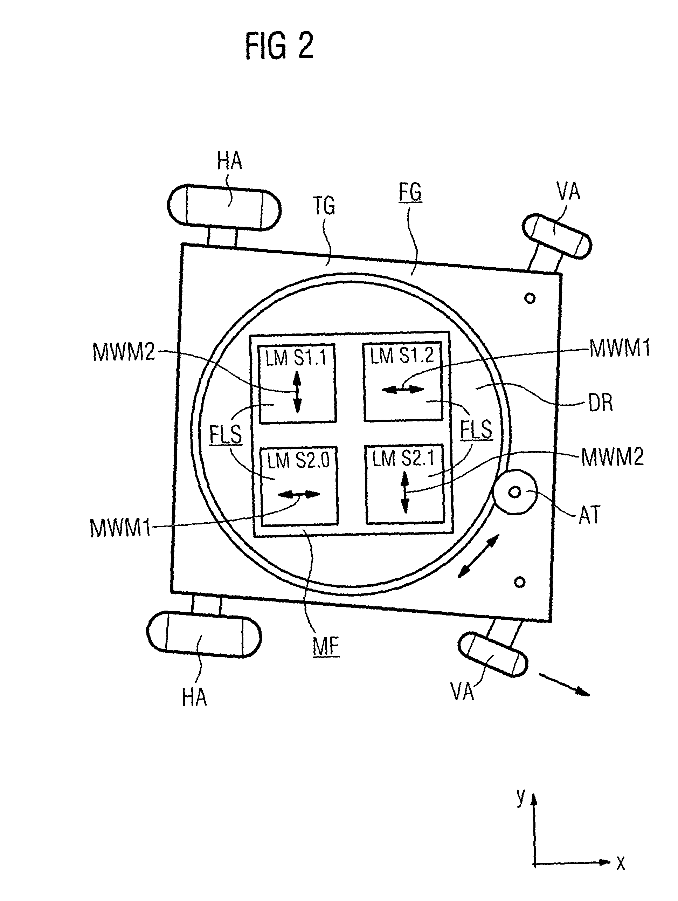

Das Feld FLS der Mobilteile des erfindungsgemäßen Flächenlinearmotors ist auf einer gegenüber der Fahrfläche FF in allen Raumrichtungen frei beweglichen Montagefläche MF verteilt angeordnet. Dabei kann die freie, möglichst reibungsarme Beweglichkeit auf unterschiedlichste Weise bereitgestellt werden. Dies kann z.B. durch ein Luftkissen unterhalb der Montagefläche MF oder durch Elemente zur Erzeugung magnetischer Hebekräfte hervorgerufen werden. Eine vorteilhafte, fahrzeugtechnische Lösung durch ein unterhalb der Montagefläche angebrachtes lenkbares Fahrwerk wird am Beispiel der Figur 2 nachfolgend noch näher erläutert werden.

Abhängig von der jeweiligen Position der Montagefläche MF relativ zur Fahrfläche FF erfolgt eine enge räumliche Annäherung einzelner Flächenkomponenten in der Fahrfläche FF zu einzelnen Mobilteilen in der Montagefläche MF. Es bilden sich somit temporär Pärchen von Primar- und Sekundärteilen, die singuläre Linearmotoren darstellen. Im Beispiel der Fig. 1 liegen z.B. die Flächenkomponente LM P3.3, LM P4.3 und LM P3.4, LM P4.2 weitgehend unterhalb der Mobilkomponenten LM S1.1, LM S2.1 und LM S1.2, LM S2.0. Durch eine geeignete Ansteuerung dieser Pärchen ist es möglich, eine parallel zur Fahrfläche FF wirkende horizontale Kraftkomponenten zu erzeugen. Weist die Montagefläche MF auf einer der Fahrfläche zugewandten Unterseite die Reibung mindernde Komponenten auf, z.B. ein Luftkissen oder ein lenkbares Fahrwerk, so kann die Montagefläche MF oberhalb der Fahrfläche FF in jede beliebige Raumrichtung manövriert werden.

So weisen im Beispiel der Fig. 1 die Pärchen LM P3.3, LM S1.1 und LM P4.3, LM S2.1 übereinstimmende, in der Blattebene von oben nach unten in y Richtung verlaufende Wirkungsrichtungen MWF2 und MFM2 auf. Weiterhin weisen im Beispiel der Fig. 1 die Pärchen LM P3.4, LM S1.2 und LM P4.2, LM S2.0 übereinstimmende, in der Blattebene quer in x Richtung verlaufende Wirkungsrichtungen MWF1 und MFM1 auf.

Erfindungsgemäß werden aus dem gesamten Feld FLD der Flächenkomponenten nur diejenigen erregt und tragen dann zur Erzeugung einer auf die Montagefläche einwirkenden Vorschubkraft bei, wenn sich ein Mobilteil auf der Montagefläche darüber befindet, dessen Wirkungsrichtung zumindest möglichst gut übereinstimmend ist und mit der gewünschten aktuellen Bewegungsrichtung. Werden somit im Beispiel der Fig. 1 die Pärchen LM P3.3, LM S1.1 und LM P4.3, LM S2.1 erregt, so wird die Montagefläche MF Koordinaten getreu in y- Richtung nach oben oder unten geführt. Werden weiterhin im Beispiel der Fig. 1 die Pärchen LM P3.4, LM S1.2 und LM P4.2, LM S2.0 erregt, so wird die Montagefläche MF Koordinaten getreu in x-Richtung nach recht oder links geführt. Werden schließlich beide Gruppen von Pärchen gleichzeitig aber mit unterschiedlicher Intensität erregt, so können Bewegungen der Montagefläche MF in jeder gewünschten Raumrichtung, z.B. auch Kurvenbewegungen, und mit ausgewählten Beschleunigungswerten ausgeführt werden.

Bei der im Beispiel der Fig. 1 dargestellten Ausführung sind als Mobilteile beispielhaft zweite Komponenten mit Elementen zur Generierung eines statischen Magnetfeldes bzw. mit ferromagnetischen Eigenschaften eingesetzt. Zusammen mit den magnetische Wanderfelder erzeugenden Flächenkomponenten stellen die oben beschriebenen Pärchen jeweils singuläre, synchrone Linearmotoren dar. Werden im Beispiel der Fig. 1 als Mobilkomponenten Elemente mit stromleitenden Eigenschaften eingesetzt, so stellen die oben beschriebenen Pärchen jeweils singuläre, asynchrone Linearmotoren dar. Die Erfindung umfaßt beide Fälle uneingeschränkt. Weiterhin gibt auch die Darstellung in Fig. 1 beide Fälle wieder. Im Falle von Pärchen aus singulären, synchronen Linearmotoren werden die Teilmengen von Mobilteilen mit den Wirkungsrichtungen MWM1, MWM2 durch den konstruktiven Aufbau der Mobilteile vorgegeben. Im Falle von Pärchen aus singulären, asynchronen Linearmotoren, bei dem die Mobilkomponenten im einfachsten Fall aus stromleitenden Metallplättchen bestehen, stellen sich die Wirkungsrichtungen MWM1, MWM2 in den Mobilteilen und somit die Teilmengen durch Erregung von entsprechenden, darunter befindlichen Flächenkomponenten ein.

Besonders vorteilhaft kann der Flächenlinearmotor gemäß der Erfindung zum Antrieb eines lenkbaren Fahrzeugs eingesetzt werden. In diesem Fall ist die Montagefläche mit einem lenkbaren Fahrwerk ausgerüstet, z.B. vergleichbar mit dem Fahrwerk eines Automobils. Eine derartige Ausführung ist in Fig. 2 beispielhaft dargestellt. Hierbei ist das Feld FLS der vier Mobilkomponenten LM S1.2, LM S2.0, LM S1.1, LM S2.1. In Fig. 2 ist eine beispielhafte Ausführung für ein Mobilteil FG des erfindungsgemäßen Flächenlinearmotors dargestellt. Das Mobilteil weist dabei ein Fahrgestell FG mit einer Tragplattform TG auf, die von einer starren Hinterachse HA und einer lenkbaren Vorderachse VA geführt wird. Ein Sollwert für die Richtung und die Beschleunigung des Fahrgestells FG kann beispielsweise dadurch vorgegeben werden, dass ein Fahrzeugführer ein Lenkrad und einen Einstellhebel betätigt, z.B. ein virtuelles Lenkrad und virtuelles Gaspedal. Beide Elemente können sich direkt auf dem Fahrgestell, u.U. aber auch stillstehend in einem separaten Simulator befinden. Der Lenkradsollwert führt direkt oder indirekt zur Lenkverstellung der lenkbaren Räder und gibt indirekt die Beschleunigungsrichtung für den Flächenlinearmotor vor. Der Gaspedalsollwert gibt indirekt den Betrag der vom Flächenlinearmotor zur erzeugenden Beschleunigung vor. Diese Sollwerte werden ein oder mehreren elektrischen bzw. elektronischen Stellgliedern ausgewählter Pärchen von Flächen- und Mobilkomponenten zugeführt.

Hierdurch können Vorschubkräfte z.B. in einer Koordinatenrichtung entstehen, wenn sich Pärchen von Flächen- und Mobilkomponenten mit möglichst gleicher Orientierung der dazugehörigen Wirkungsrichtungen übereinander befinden und eingeschalten sind. Im Beispiel der Fig. 1 sind dies die bereits erläuterten Pärchen LM P3.3, LM S1.1 und LM P4.3, LM S2.1, bzw. die Pärchen LM P3.4, LM S1.2 und LM P4.2, LM S2.0. Während einer Kurvenfahrt eines lenkbaren Mobilteiles gemäß dem Beispiel von Fig. 2 wird diese Zuordnung von Pärchen derart beeinflusst, dass sich zunehmend die Übereinstimmung der Orientierung der Wirkungsrichtungen der zugeschalteten Pärchen verschlechtert. In diesem Fall ist es vorteilhaft, während einer Kurvenfahrt dynamisch diejenigen Pärchen von Flächen- und Mobilkomponenten zu- bzw. abzuschalten, bei denen sich die Übereinstimmung der Wirkungsrichtungen zunehmend verschlechtert bzw. verbessert. Es kann dann eine jeweils gewünschte Beschleunigung und Fahrtrichtung eingehalten bzw. dynamisch angepasst werden.

Gemäß einer weiteren, im Beispiel der Fig. 2 bereits dargestellten Ausführungsform der Erfindung ist das Feld FLS der Mobilkomponenten LM S1.2, LM S2.0, LM S1.1, LM S2.1. auf einem Drehteller DR angebracht, der drehbar auf einem Fahrgestell FG platziert ist und von einem Antrieb AT nachgeführt werden kann. Hierdurch wird es möglich, dass das Fahrgestell mit frei lenkbaren und einem on-board Antrieb wie z.B. einer Verbrennungskraftmaschine versehenen Fahrzeugen vergleichbare Bewegung ausführen kann. Es sind Kurvenfahrten und nicht nur Verschiebungen in x- oder y Koordinatenrichtung möglich. Dies wird durch diese weitere Ausführungsform dadurch erreicht, dass die Mobilkomponenten auf dem Fahrgestell koordinatentreu der Matrix der Flächenkomponenten durch Drehung nachgeführt wird. Entsprechend der obigen Sollwerte kann beispielsweise ein Servomotor AT die Drehung zwischen Fahrgestell und dem Feld FLS der Mobilkomponenten realisieren. Eine Drehung wird vorgenommen, wenn einerseits eine Bewegungsrichtungsänderung des Fahrgestells durch einen entsprechenden Lenkeinschlag z.B. von einem Fahrer vorgegeben wird. Während der Ausführung der Kurvenfahrt wird das Mobilteil MF auf dem Fahrgestell durch Drehung des Drehtellers DR so nachgeführt, dass die Wirkungsrichtungen MWM1, MWM2 der darauf befindlichen Mobilkomponenten LM S1.2, LM S2.0, LM S1.1, LM S2.1 immer möglichst parallel sind zu den Wirkungsrichtungen MWF1, MWF2 der jeweils darunter befindlichen und erregten Flächenkomponenten ist. Hiermit können dynamische Kurvenfahrten des Fahrgestells, also Kurvenfahrten mit kleinen Kurvenradien und hohen Kurvengeschwindigkeiten, durchgeführt werden.

Wie bereits erläutert wurde, entstehen Vorschubkräfte in einer Koordinatenrichtung, wenn sich Pärchen von Flächen- und Mobilkomponenten mit möglichst gleicher Wirkungsrichtung übereinander befinden und eingeschalten sind. Hierzu ist es zur Erzeugung von Beschleunigungskräften in zwei Koordinatenrichtungen grundsätzlich ausreichend, wenn sich im asynchronen Fall zumindest ein bzw. im synchronen Fall zumindest zwei Mobilkomponenten mit unterschiedlichen Wirkungsrichtungen auf dem Mobilteil befinden. Im Beispiel der Figuren 1 und 2 können dies die Mobilkomponenten LM S1.1 und LM S1.2 für den synchronen Fall sein. Im asynchronen Fall würde z.B. die Mobilkomponente LM S1.1 ausreichend sein. Da die wirksamen Motorflächen des erfindungsgemäßen Flächenlinearmotors bei einer Bewegung des Fahrgestells FG über der Fahrfläche FF, d.h. die flächenmäßige Überdeckung der aktiven Flächenkomponenten und der zugeordneten, aktiven Mobilkomponenten nicht konstant sind, können geringfügige Schwingungen der Beschleunigungskraft entlang der x- bzw. y- Raumkoordinate auftreten. In Weiterführung der Erfindung können diese Beschleunigungskräfte dadurch vergleichmäßigt werden, dass mehr als zwei Mobilkomponenten mit unterschiedlichen Wirkungsrichtungen auf dem Mobilteil vorhanden sind. Hiermit können weiterhin unerwünschte Drehmomente zwischen den drehbar angeordneten Mobilkomponenten des Mobilteils und nicht exakt passgenau darunter befindlichen Flächenkomponenten verringert werden.

Besonders vorteilhaft ist eine Versuchsanlage mit einem erfindungsgemäßen Flächenlinearmotor versehen, bei der das Mobilteil FG einen Simulator für ein Straßenfahrzeug darstellt, und der Flächenlinearmotor den Antrieb oder das Fahrwerk des Straßenfahrzeugs nachbildet. Vorteilhaft ist dabei das Mobilteil FG als Simulator mit einer Fahrzeugkarosserie ausgerüstet. Je nach Anwendungsfall kann es sich hierbei z.B. um eine Rohkarosserie, um eine teilweise fertiggestellte Karosserie z.B. ohne Fahrwerk oder ohne Räder, bzw. ein vollständiges, auf dem Mobilteil gegen Herunterfallen abgesichert montiertes Fahrzeug handeln. Andererseits kann auch der Boden eines Fahrzeugprototyps bzw. eines Versuchsfahrzeuges mit einem Drehteller DR gemäß der Ausführung von Fig. 2 versehen sein. Die Erfindung bietet den Vorteil, Fahrversuche z.B. an in der Entwicklung befindlichen Straßenfahrzeugen unter Laborbedingungen durchzuführen, z.B. in einer mit einem Flächenlinearmotor gemäß der Erfindung ausgerüsteten Versuchshalle. Weiterhin können derartige Versuchsfahrzeuge Beschleunigungskräften in allen Raumrichtungen ausgesetzt werden, die bei regulären Fahrversuchen unter Feldbedingungen im Freien aus physikalischen und aus Sicherheitsgründen nur schwer erreichbar sind.

## Patentansprüche

1. Flächenlinearmotor, mit
a) ersten Komponenten (LM P1.0, LM P1.1 - LM P6.5, LM P6.6) zur Generierung magnetischer Wanderfelder, und
b) zweiten Komponenten (LM S1.1, LM S1.2, LM S2.0, LM S2.1) mit Elementen zur Generierung eines statischen Magnetfeldes bzw. mit ferromagnetischen und/oder stromleitenden Eigenschaften, wobei
c) erste oder zweite Komponenten in einer Fahrfläche (FF) so verteilt angeordnet sind (FLP), dass die ersten bzw. zweiten Komponenten eine erste Teilmenge (LM P1.0, LM P1.2, ...) mit einer ersten Wirkungsrichtung (MWF1) und eine zweite Teilmenge (LM P1.1, LM P1.3, ...) mit eine zweiten Wirkungsrichtungen (MWF2) bilden, wobei die Teilmengen in einer Fahrfläche (FF) netzartig ineinander liegen (FLP) und die erste und zweite Wirkungsrichtung (MWF1, MWF2) unterschiedlich sind,
d) zweite oder erste Komponente auf einem Mobilteil (MF) so verteilt angeordnet sind (FLS), dass die zweiten bzw. ersten Komponenten eine dritte Teilmenge (LM S1.2, LM S2.0) mit einer dritten Wirkungsrichtung (MWM1) und eine vierte Teilmenge mit einer vierten Wirkungsrichtung (MWM2) bilden, wobei die Teilmengen auf einem Mobilteil (MF) netzartig ineinander liegen und die dritten und vierten Wirkungsrichtungen (MWM1, MWM2) unterschiedlich sind, und
e) die ersten und zweiten Wirkungsrichtungen (MWF1, MWF2) der ersten und zweiten Teilmengen mit den dritten und vierten Wirkungsrichtungen (MWM1, MWM2) der dritten und vierten Teilmengen jeweils paarweise (MWF1,MWM1; MWF2,MWM2) möglichst übereinstimmen.

2. Flächenlinearmotor nach Anspruch 1, wobei die ersten und zweiten Wirkungsrichtungen (MWF1, MWF2) der ersten und zweiten Teilmengen, und die dritten und vierten Wirkungsrichtungen (MWM1, MWM2) der dritten und vierten Teilmengen jeweils orthogonal zueinander sind.

3. Flächenlinearmotor nach Anspruch 1 oder 2 nach einem der vorangegangenen Ansprüche, wobei die ersten Komponenten (LM P1.0, LM P1.1 - LM P6.5, LM P6.6) jeweils Spulen mit Blechpaket zur Generierung eines magnetischen Wanderfeldes aufweisen.

4. Flächenlinearmotor nach einem der vorangegangenen Ansprüche, wobei das Mobilteil (MF) ein frei lenkbares Fahrgestell (FG) aufweist.

5. Flächenlinearmotor nach Anspruch 4, wobei das Mobilteil (MF) auf dem frei lenkbaren Fahrgestell (FG) so drehbar (DR,AT) angeordnet ist, dass unabhängig von der Position des Mobilteils (MF) über der Fahrfläche (FF) die Wirkungsrichtungen (MWM1, MWM2) der dritten und der vierten Teilmenge von Komponenten auf dem Mobilteil (MF) den Wirkungsrichtungen (MWF1, MWF2) der ersten und der zweiten Teilmenge von Komponenten in der Fahrfläche (FF) nachgeführt werden.

6. Versuchsanlage mit einem Flächenlinearmotor nach Anspruch 4 oder 5, wobei das Mobilteil (FG) einen Simulator für ein Straßenfahrzeug darstellt, und der Flächenlinearmotor den Antrieb des Straßenfahrzeugs nachbildet.

7. Versuchsanlage mit einem Flächenlinearmotor nach Anspruch 4 oder 5, wobei das Mobilteil (FG) einen Simulator für ein Straßenfahrzeug darstellt, und der Flächenlinearmotor das Fahrwerk des Straßenfahrzeugs nachbildet.

8. Versuchsanlage nach Anspruch 6 oder 7, mit einer Fahrzeugkarosserie als Simulator auf dem Mobilteil (FG).
